Europäisches Patentamt

**European Patent Office**

**Office européen des brevets**

(19)

(11) Publication number: **0 335 016**

**A1**

(12)

# EUROPEAN PATENT APPLICATION

(21) Application number: **88202257.7**

(22) Date of filing: **10.10.88**

(51) Int. Cl.⁴: **B60G 17/06 , B61F 5/12 , F16F 9/46**

(30) Priority: **28.03.88 ES 8800942**

(43) Date of publication of application:
**04.10.89 Bulletin 89/40**

(84) Designated Contracting States:
**DE FR GB IT SE**

(71) Applicant: **Castillo, Jose Luis**
**Pan y Toros, 35**
**Madrid(ES)**

(72) Inventor: **Castillo, Jose Luis**
**Pan y Toros, 35**
**Madrid(ES)**

(74) Representative: **Francos-Florez Cristopulos,**
**Amelia**
**Calle Serrano, 72**
**E-28001 Madrid(ES)**

(54) **Damping system for vehicles with sense control of the damping forces produced.**

(57) DAMPING SYSTEM FOR VEHICLES WITH SENSE CONTROL OF THE DAMPER FORCES which consists of various actuator components, in which the forces are produced. Sensors inform the control component of the movements of the vehicle. The said component determines the modes of oscilation excited and the sense which the forces must take to achieve equilibrium.

The control component the actuator components in which the forces are created only in the proper sense, whatever the sense of the relative movement between the suspended and non-suspended parts.

FIG. 5.A

FIG. 1.A

FIG. 5.B     FIG. 5.C

EP 0 335 016 A1

Xerox Copy Centre

## DAMPING SYSTEM FOR VEHICLES WITH SENSE CONTROL OF THE DAMPING FORCES PRODUCED.

The invention can be applied in general to all road or rail vehicles provided with suspension with elastic components.

Vehicles habitually use hydraulic damper to restore the equilibrium of the self oscillations.

The direction of the forces created in these devices depends on the directions of the relative movement between the suspended and non-suspended parts of the vehicle.

This relative movement is the superimposing of two movements: 1) that to the self oscillations of the suspended mass; 2) that due to the irregularities in the ground, which can create in the damper forces in a direction non suitable to achieve equilibrium in the self oscillations.

The system consists of various components, in which the forces are produced. Sensors inform the control component of the movements of the vehicle. The said component determines the modes of oscillation excited and the sense which the forces must take to achieve equilibrium.

The control component activates the actuator components, in which the forces are created only in the proper sense whatever the sense of the relative movement between the suspended and non-suspended parts

Fig. I shows the diff erence in behaviour which exists between a conventional damper and the damping system featured in the inven tion for the simple degree of the freedom system represented in Fig. I formed by mass, a spring, a damper and a non-suspended part which is obliged to follow an oscillatory movement representative of the profile of the ground or physical support travelled over at a certain horizontal moving speed.

In the Fig. I B it appears a supposed relative movement between the mass and the non-suspended part after excitation of the mass. The superimposing of movements can be appreciated: that due to the self oscillation of the mass, which is a quenched low frequency oscillation, and taht due to the nature of the ground represented by the rapid oscillations.

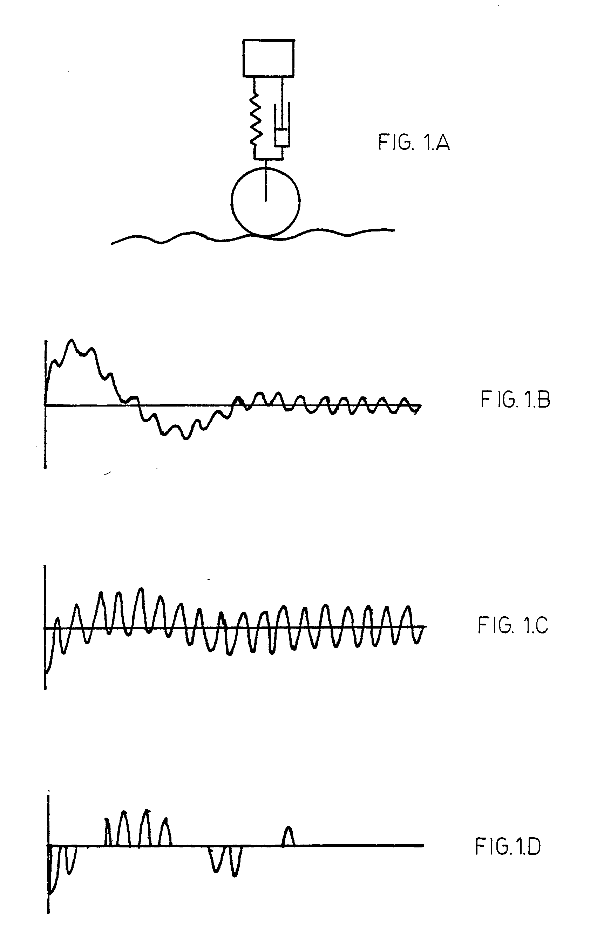

In the Fig. I C, are represented the forces created in the conventional damper subjected to a relative movement between its extremes represented in Fig. 1 b. These forces, on occasions, do not favour damping of the mass, but tend to excite self oscillations. When the equilibrium of the self oscillations the mass has been achieved, but the ground irregularities persist , the conventional damper continues unnecesarilly and detrimentally,transmitting forces to the mass, which can provoke further excitation.

Fig. I Dshows the behaviour of the system featured in th e invention. The control component detects the movement of the mass regarding the average line of the ground of the damping force and accordingly activates the actuator component. It can be appreciated that the forces created are either nil or they oppose the movement of the mass relative to the average plane of the ground. They never excite the self oscillatory movement of the mass. When oscillation of the mass regarding the said plane has ceased, the creation of forces also ceases and the suspension system behaves as if only the spring existed.

Figs. 2, 3, 4 and 5 represent possible executions of the invention for a degree of freedom system.

Figs. 2A, 3A,4A, and 5A are the control components corresponding to each of the said executions.

Figs. 2B, 4B and 5B represent actuator components applied to a suspension system which uses a gas as elastic component.

Figs 2C, 3B, 4C and 5C represent actuator components with the external view of a conventional damper:

Figs 6, 7, 8 y 9 represent different executions of control components for a four wheeled vehicle in which bouncing, pitching and rolling modes, have been considered. The actuator components corresponding to each of the said figures are respectively those representing in Figs.2, 3, 4 and 5.

Next, each one of the said executions of the invention is explained in more detail, in the first place for the simple degree of the freedom sustem represented in Fig. 1 A.:

## EXECUTION ACCORDING TO FIG, 2

As preference for the same oscillations of the mass, the ground profile is chosen once period or short term disturbances have been eliminated, compared this period with the period of the mass-spring system itself.

The control component determines, in the first stage, a -signal representative of the deviation in the position of the mass with regard to the same reference. In the second stage it determines the suitable sense of the forces created in the actuator component.

It is desirable for the signal representative of the oscillation, resultin from the first stage, to be advanced with regard to the real position of the mass. In this way, the action of the actuator component, is anticipated with the aim of achieving efficient damping of the self movement of the mass. The characteristics of this first stage must be such that 1) periodic or short term oscillations are eliminated compared with the period of the mass-spring system itself, 2) for movement between the suspendied part and the non-suspended sinusoidal in frequency that of the mass-spring system, the outlet signal appears advanced with regard to the movement introduced. This advanced in phase will be -between 0 and 90 degrees and 3) A certain damping must exist on -the signal in accordance with the damping characteristics desired for the movement of the mass.

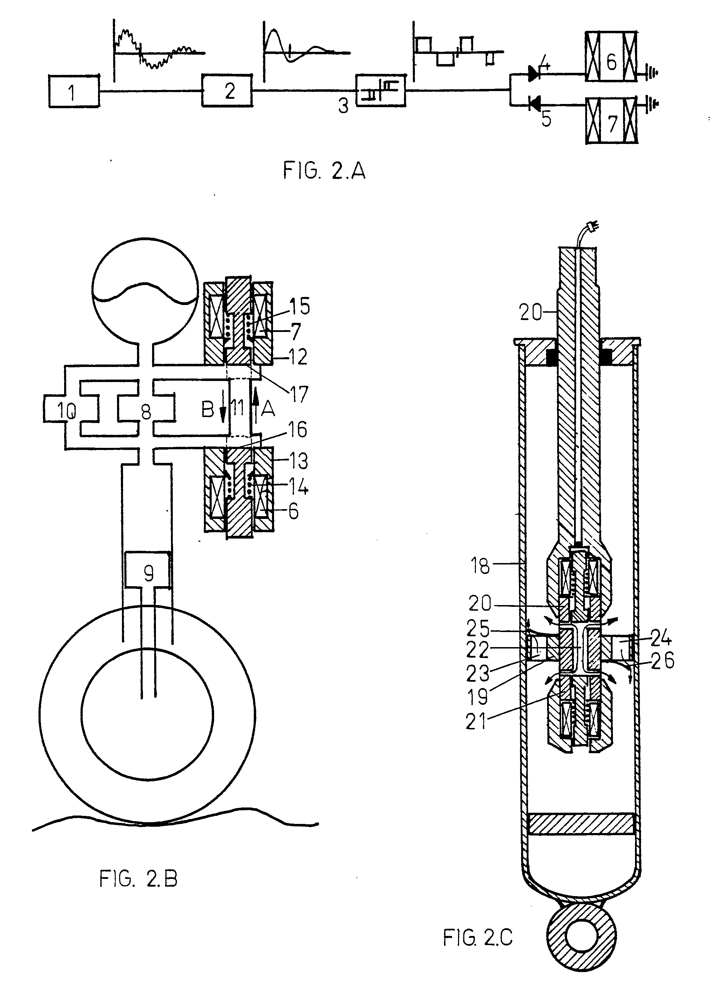

Fig. 2 A shows a control component which consists of:

A Sensor 1 which emits a signal representative of the position of the non-suspended part with regard to the suspended part. B Bandpass Filter 2, with a resonance frequency slightly greater than the frequency of the mass -spring system itself and with suitable damping characteristics.

An on-off component with a dead interval and hysteresis 3 which determines the sense of the damping force must take.

-Rectifier Diodes 4 and 5 separate the positive part from the negative in the signal resulting from 3.

-Amplifiers (not represented in Fig. 2A) which increase the power of the signals with the aim of activating Coils 6 and 7 of the electrovalves situated in the actuator component.

Fig. 2B shows an actuator component on a pneumatic sus pension system. The system consists of:

- Narrow Pass 8 which produces a pressure jump, and conse quently the damping force, when Piston 9, joined to the non-suspended part, draws up the hydraulic fluid contained in the cylinder.

- A Pressure Limiter Valve in both flow senses 10, which comunicates with both sides of Narrow Pass.8, and which has as its aim pre vention of the creation of excessive forces provoked by sharp irregularities in the ground profile.

- A Control Tube, 11 which communicates with both sides of Narrowing 8, and which can free the passage of fluid or not depending on wheter Electrovalves 12 and 13 are activated by the control component or not. The said electrovalves are situated in opposition, in such a way that each of them has the possibility, if activated, of blocking the passage of the fluid in one sense, its closed position being overcome when the fluid passes in the opposite sense.

The activating or de-activation of Coils 6 and 7 produces three different states of behaviour in the actuator component:

- In a state of non-activation of Coils 6 and 7, Springs 14 and 15 keep Pistons 16 and 17 in a rectracted position, in such a way that the fluid passes freely through 11. No force is produced.

- Closure of the fluid passage through 11 in sense (A) allowing passage in the opposite sense (B). This stated is produced by the activation of 6.

- Closure of the fluid passage through 11 in sense (B), allowing passage in the opposite sense (A). This state isproduced by the activation of 7.

When the fluid, on being drawn by piston 9, finds passahe 11 closed it is forced to pass through Narrowing 8, and the damping force is produced.

The actuator component will provoke a force in a determined sense between the suspended and non-suspended parts provided that two conditions arise simultaneously

- That the control component activates the corresponding electrovalves.

- That the movement of piston 9 draws up the fluid in such a way that this finds Control Passage 11 closed.

Activating a certain state(or the corresponding electrovalve) means authorising or wanting the forces created in the actuator component to have a determined sense. The said force will be produced or not depending on the relative movement between the suspended and non-suspended parts.

When because exterior excitation the suspended mass begins to oscillate, the control component activates Electrovalves 12 and 13 in such a way that the damping forces created either oppose the self oscillation of the mass, or are nil. This behavour can be appreciated in Fig. 1 D.

If a sharp irregularity in the ground profile is met, limiter valve 10 avoids the creation of disproportionate forces.

When the self oscillation of the mass ceases both electrovalves are de-activated and the creation of forces ceases. The complete suspension system behaves as if only the spring or elas tic component existed.

From these considerations it can be deduced that ground irregularities can favour the good operation of the suspension system.

The invention is particularly indicated for those vehicles which move on a support with short period or short term of duration, these periods compared wit the period of self oscillations.

The application is also of use in those suspensio systems in which the non-suspended part does not receive the movements -directly from the ground, but from another elastic system, such us it occures with the secondary suspensions used in rail vehicles.

Fig. 2 C shows an actuator component which consists of a Cylinder 18 inside which there is an hydraulic fluid. A piston 19 mounted on a Rod 20 slides inside Cylinder 18. On the said rod Electrovalves 20 and 21 are mounted which open or close Passage Controll 22. Tubes 23 and 24 have mounted on them; elastic Plates 25 and 26 which have the same effect as Narrowing 8 . On the lower part of Cylinder 18 there is a volume occuped a gas which has as its aim the absortion of the volume the Rod 20, when this is introduced into the Cylinder.

Not represented in the said Fig. is the tube corresponding to Pressure Limiter valve 10.

The connections of Electrovalves 20 and 21 reach the outside through the hole made in the Rod 20.

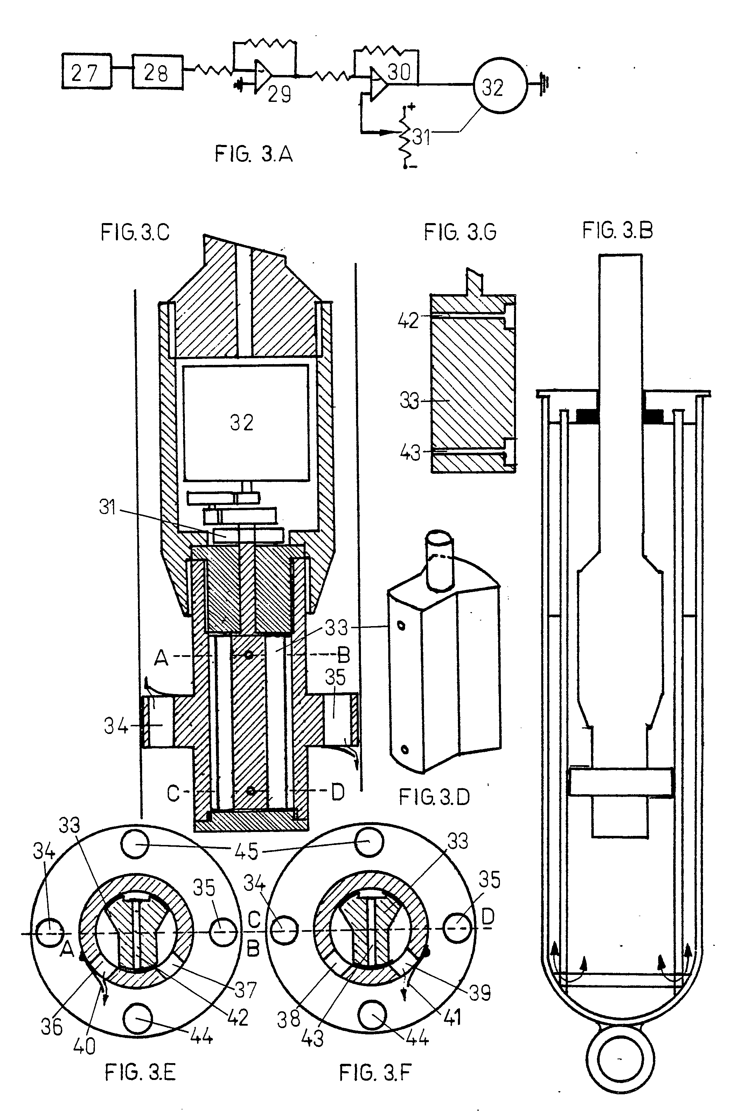

## EXECUTION ACCORDING TO FIGURE 3

In the case the actuator component uses a revolving valve represented in Fig. 3 D, actioned by an electric motor.

The control component consists of:
- A sensor 27 which provides a signal of position between the suspended and non-suspended parts.
- A Bandpass Filter 28
- A signal Amplifier 29
- An amplifier 30 which takes as its reference the signal of the Potentiometer Pointer 31 situated in the axis of Revolving Valve 33.
- A Power Amplifier (not represented in Fig.) which actions electric motor 32 situated in the actuator component.

Figs. 3B to 3 G show the layout of an actuator component which consists of:
- Narrow Passes 34 and 35 , in which is produced a fall in pressure which gives way to the damping foree. The elastic plates situated in these tubes allow circulation with restriction in a determined sense, and block passage in the opposite sense.

Pressure limiter valves in both flow sense, which communicate with both sides of the narrow passes, situated in tubes 44 and 45.
- A revolving valve 33 situated inside a hollow cylinder which has lateral tubes 36,37,38 and 39. In tubes 36 and 39 thera are elastic plates 40 and 41 which in their natural position are on the external face of the cylinder.
- An electric motor 32 which through reducer gears moves valve 33.

The three states of the actuator component are the following:
- When valve 33 is in the position indicated in Fig. 3 E and Fig. 3 F, the fluid passes either entering by 38 and leaving by 36, or entering by 37 and leaving by 39. Elastic plates 40 and 41, allow free passage in one sense and block passage in the opposite sense. In this case forces are not produced in the actuator component.

- When valve 33 revolves antil it closes tubes 36 and 38, the fluid passes freely if it enters by 37 and leaves by 39. But if the pressure pushes the fluid in the opposite sense, plate 41 closes and it has to pass through narrow pass 34, so that the damping -force is produced . With the aim of easing the revolving of valve 33.
Tube 42 and 43 stop the fluid pressure laterally pressing the said valve against the cylinder.Figs. 3E and 3F and 3G show the said tubes.

If valve 33 is situated in such a way that tubes 37 and 39 remain closed, the fluid either circulates freely passing from 38 to 36, or it is forced to pass through 35, so that the damping said valve against the cylinder. Figures 3E and 3F and 3G show the said tubes.
- If valve 33 is situeted in such a way that tubes 37 and 39 remain closed. the fluid either circulates freely passing from 38 to 36, or it is forced to pass through 35, so that te damping force is produced.

The disposition and characteristics of potentiometer 31 must be such that the extreme positions of valve 33(closure of 37 and 39, or closure of 36 and 38), correspond to the amplifier saturation voltages. It is also possible to replace amplifier 29 with an on-off component similar to that of the Fig. 2 A.

This practical execution es equally aplicable to a pneuma tic suspension, similar to that shown in Fig. 2 B.

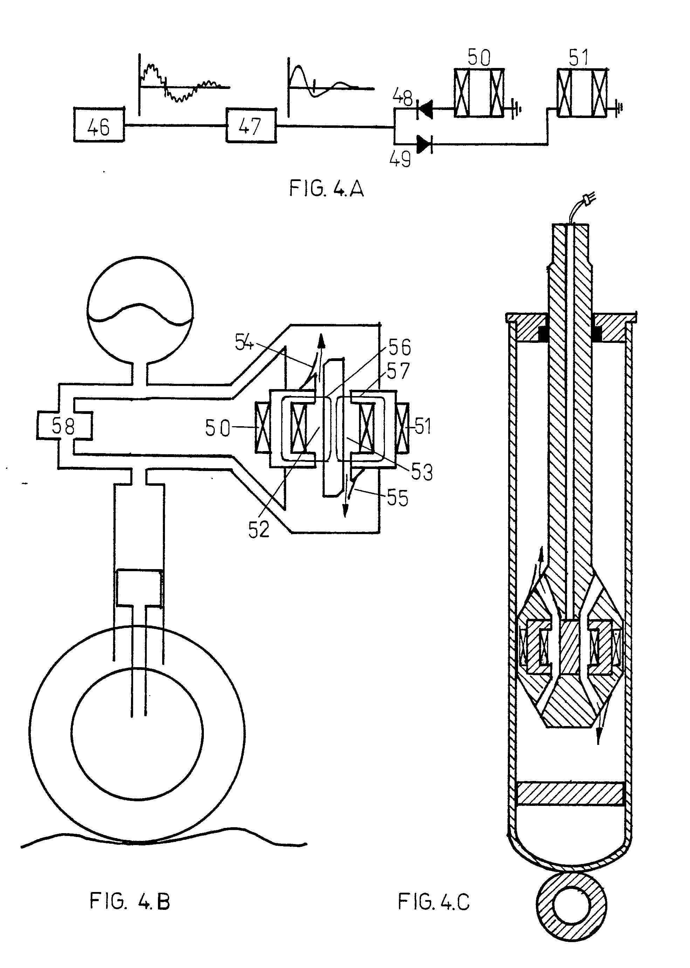

## EXECUTION ACCORDING TO FIGURE 4

In this case in the actuator component a magnetic fluid is used which has the property of varying its viscosity on apply ing to it, a magnetic field.

The control component shown in Fig. 4B is a similar to that in Fig. 2 A in which the on-off component has been eliminated. This control component consists of:
- A Sensor 46 which provides a signal of position between the suspended and non-suspended parts.
- A Bandpass filter 47
- Diodes 48 and 49 separating the positive and negative parts of the signal proceeding from 46.
- Power amplifiers (not represented in the fig.) which activates Coils 50 and 51 situated in the actuator component for the creation of the magnetic fields in the fluid.

Fig 4 B shows the layout of an actuator component applied to a pneumatic suspension. The said component consists of:
- Two Fluid Passage Control Tubes 52 and 53, in each of which is situated an elastic Plate 54, or 55, and a magnetic circuit represented by lines 56 or 57 created by Coils 50 or 51. Plates 54 and 55 allow circulation in one sense, without appreciable resistence and close when the fluid passes in the opposite sense.
- A Pressure Limiter valve 58 in both flow sense situated in parallel with Tubes 52 and 53.

On Coils 50 or 51 being activated from the control component the viscosity of the fluid is increased in the areas through which the magnetic field crosses the tube, producing(when the fluid circulates) a pressure drop in the tube.This pressure drop will be a growing function if the voltage on the edges of the coil and of the speed in which the fluid passes through Tube 52 or 53. In this way the damping forces produced depend not only on the relative speed between the suspended and non-suspended parts, but besides, on the range of the self oscillations of the suspended mass.

The same as in execution in Fig. 2, activation or de-activation of Coils 50 or 51 gives way to three different states of behaviour in the actuator component:
- In the state or non-activation of Coils 50 and 51 the fluid circulates freely either through 52 or through 53 depending on the sense of the relative movement between the suspended and non-suspended parts. In this case the actuator component doeas not exert any force.
- When Coil 50 is activated and actuator component exerts on the suspended mass an upward force when the fluid passes through 52 and exerts a nil or negligible force when the fluid circulates -through 53.
- Similarly, when Coil 51 is activated, and depending on the sense the fluid moves in, either downward forces, or nil or negligible forces are produced on the suspended mass.

Fig. 4 C shows an actuator component with the control tubes on the piston. Its components are similar to those in Fig. 4 B, but the pressure limiter valve is not represented.

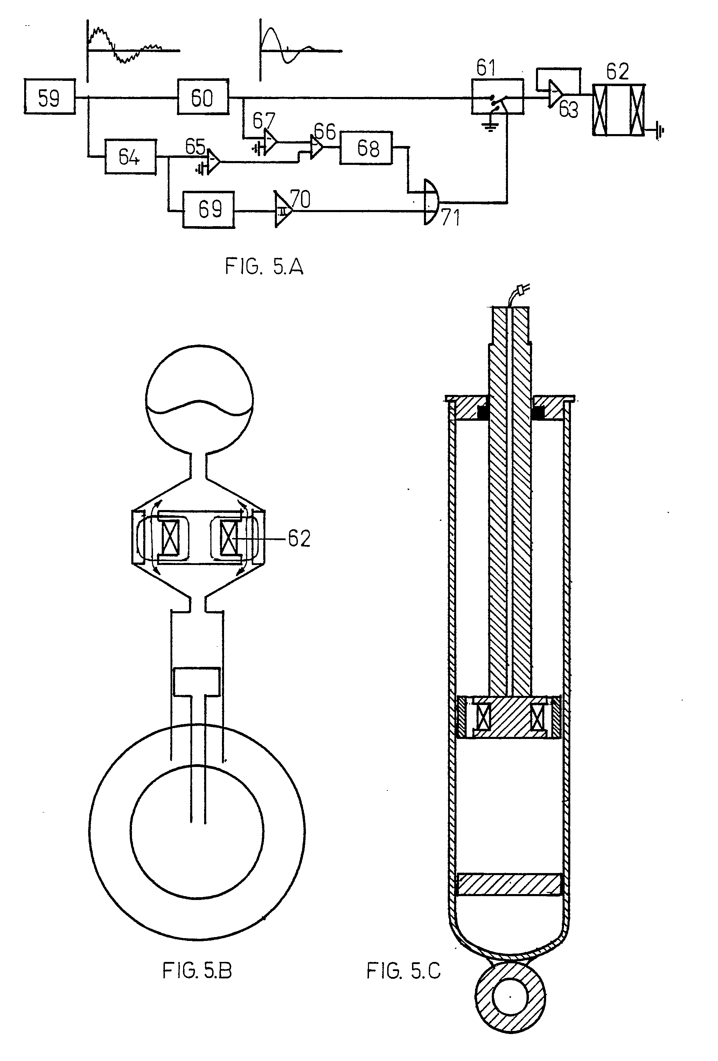

## EXECUTION ACCORDING TO FIG. 5

In this case magnetic fluid is also used in the actuator component. The control component is responsible not only for determining non-suspended parts exceeds a certain rate (with the aim of evoiding excesive forces ), or when the said speed has not the same sense as the self oscillation speed.

In this way the functions are carried out which in Fig 2, 3 and 4 where carried out in a natural way by the prssure limiter valve and the elastic components in the control tube.

The greater complexity of the control component is compensated by the greater simplicity of the actuator component.

The control component consists of:
- A sensor 59 which emits a signal representative of the position of the suspended part with regard to the non-suspended.
- A band-pass filter 60 which determines the self oscillations of the suspended mass.
- An electronic switch 61 with two positions which has inputs the outlet from filter 60 and nil voltage.

Its outlet is connected to coil 62 situated in the actuator component through an amplifier 63.
- A diferenciator circuit 64 whose input is the outlet from sensor 59 and whose cutlet is connected to amplifier 65.
- A comparator 66 which by means of two saturation amplifiers 65, and 67 compares the sense of the signal representative of the relative speed between the suspended and non-suspended parts( proceeding from differenciator circuit 64) with the sense of the signal representative of the self oscillation(proceeding from Bandpass Filter 60 ).
- A Scmitt trigger 70 which takes signal of a Rectifier 69 from the signal which proceeds from differenciator 64.
- An OR Gate 71 which has as its input the outputs signal of a Signal Rectifier 68 ( proceeding from Comparator 66) and the output signal of Schmitt trigger 70, and whose active outlet connects to ground the output of Electronic Switch 61.

The actuator component uses as hydraulic fluid a magnetic liquid and consists of a magnetic circuit excited by a Coil 62 in such a way that lines of magnetic flow cross the fluid path when the fluid is drawn up by the piston.

When because of excitation the mass begins to oscillate,Filter 60 emits a signal which, through 61 and 63, reaches Exciter -Coil 62, a force being produced in the actuator component which depends on the relative speed between the suspended and non-suspended parts and the range of the outlet signal from Filter 60. If the said relative speed exceeds a certain threshold determined in the Scmitt-trigger 70 or has a signal contrary to the output signal of Filter 60, OR Gate 71 emits a signal which commutates to the ground the output signal of Switch 61. In this case Coil 62 is not excited and the actuator component doeas not produce any force.

Similary to the execution of Fig.2,3, and 4 there are three states of behaviour of the actuator component:
- When the output signal from Filter 60 is nil the magnetic field in the actuator component is not excited and the forces created are nil.
-If the output signal from Filter 60 is positive the damping force on the suspended mass is dawnwards, unless the relative speed between the suspended and non-suspended parts is negative. In this case the damping force is nil.
- If the output signal from Filter 60 is negative, the damping force will be either upwards, or nil, depending on wheter th e relative speed is negative or positive, respectively. The behaviour of the systems corresponding to Fig. 4 and 5 is practically the same.

## SYSTEMS WITH VARIOUS DEGREES OF FREEDOM

The system in this case will contain an actuator component for each non-suspended part. The control component must be able to detect, starting from signals from the sensors, the oscillation modes excited . It is convinient that the system of oscillation modes which determine the attitude of the vehicle is - chosen in such a way that the said modes are practically independent. Each of them will be dealt with separately as if it were a degree of freedom system.

If the frequencies of the oscillation modes are close together the existence of the group control system is not necessary : each actuator component can function independently of the others, controlled by its own control component, in accordance with that described for degree of freedom system.

Next, the application of the invention to a four wheeled vehicle is described with four different executions: a) The oscillations modes are considered at the beginning mode in which all the oscillations points in the vehicle move at the same speed according to the·vertical. .b) The pitching mode or or oscillatory movement tourning on an axis which passes through the center of gravity of the vehicle and which is perpendicular to the longitudinal plane. and c) the rolling mode , which is the oscillatory movement around the axis of the lateral rolling.

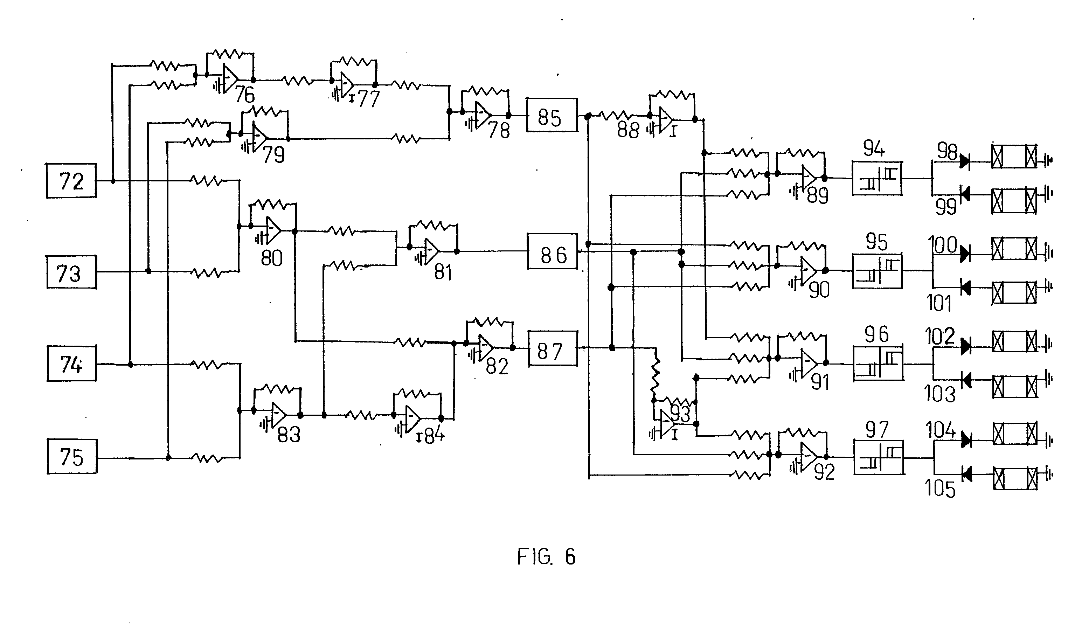

## EXECUTION ACCORDING TO FIGURE 6

The control component consists of:
- Sensor, 72, 73 and 74 and 75 which provides signals representative of the position of the left front, right front, left rear and right rear non-suspended parts respectively, relative to the suspended part of the vehicle.
- Amplifiers 76 to 84, which combine the signals of Sensors 72 to 75, in accordance with the geometric characteristics of the vehicle, and in such a way that Filters 85, 86, 87 determine the signals corresponding to the rollingbouncing and pitching modes respectively.
- Amplifiers 88 to 93 which inversely recombine the output signals from Filters 85, 86 and 87, so that the on-off components with dead intervale and hysteresis 94, 95, 96 and 97, corresponding to the left front, right front, left rear, right rear non suspended parts respectively, determine the direction, which the forces must take in each of the actuator components corresponding to each of the said parts.
- Diodes 98 to 105 which separate the positive from the negagative signals of each one of on-off components 94 to 97.
-Power amplifiers (not represented) which allow activation of the electrovalves situated in the actuator components.

The actuator components corresponding are those shown in Fig. 2.

The linear combinations , corresponding to the control system are the following,(adopting the convention that the output signal from each marker in Fig. 6 is represented by the corresponding number in brackets):
- Input signal into rolling Mode Filter 85: $[(73)+-(75)-(72)-(74)]/A$
- Input signal into Bouncing Mode Filter 86: $[[(72)-+(73)]*B+[(74)+(75)]*C]/[[B+C]*2]$
- Input signal into pitching Mode Filter 87: $[(72)+-(73)-(74)-(75)]/[B+C]$:
A being half the width of the track; being B the distance from the center of gravity to the rear axle; C being the distance from the center of gravity to the front axle.
- Input signal from on-off component 94: $(85)*A-(86)+(87)*C$
Input signal into 95: $-(85)*A-(86)-(87)*C$
Input signal into 96: $-(85)*A-(86)+(87)*C$
Input signal into 97: $-(85)*A-(86)+(87)*C$
The connections of the inputs of each actuator component must be polarised in such a way that the forces created oppose the oscillatory movements.

## EXECUTION ACCORDING FIC. 7

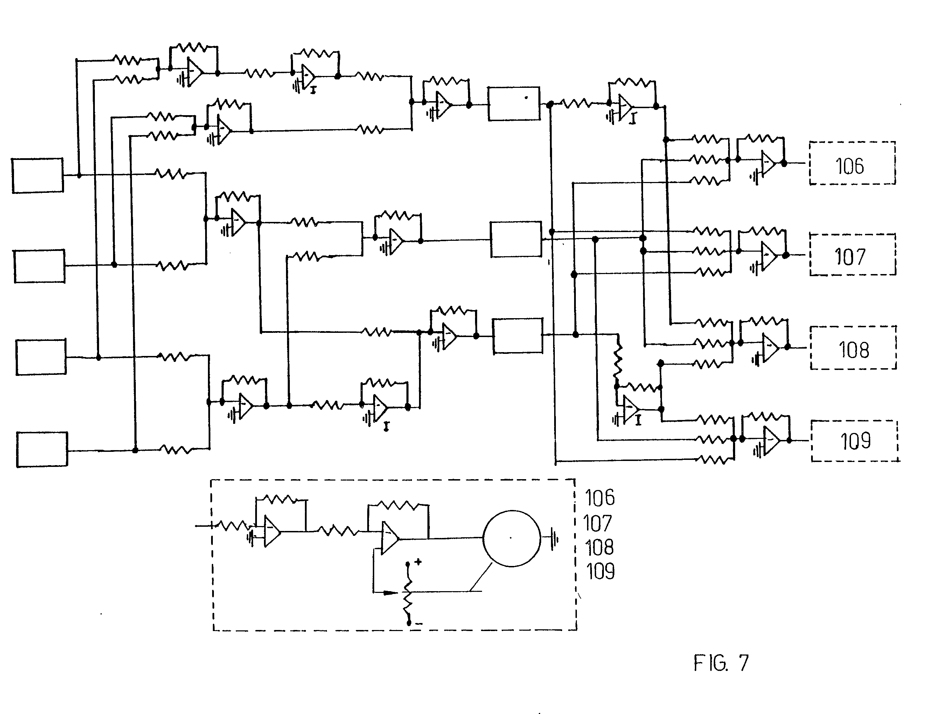

The control component is the same as in Fig. 6, eliminating Diodes 98 to 105 and adding, for each non-suspended part, the com ponents similar to 29, 30 and 31 (Fig. 3.A.). The corresponding layout is shown in Fig. 7. The actuator components are those in Fig.3.

It is also possible to use the control system resulting from elimination, in Fig. 6, Diodes 98 to 105 and placing behind each on-off component units similar to 30 and 31(Fig.3A). The actuator components are those in Fig. 3.

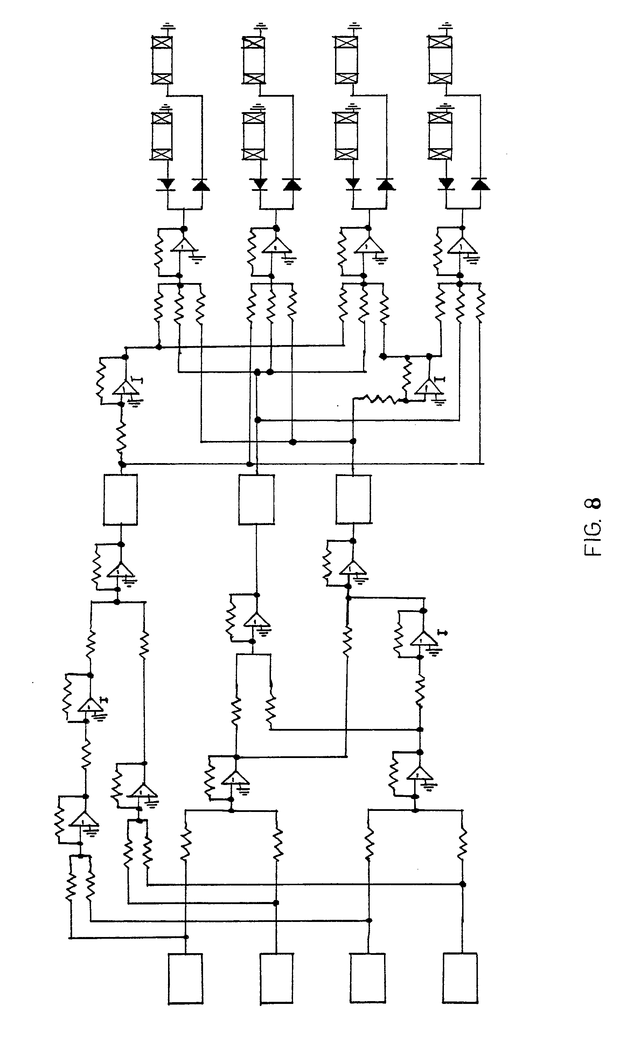

## EXECUTION ACCORDING TO FIG. 8

The control component is the same as in Fig. 6, eliminating on-off components 94 to 97. The actuator components are those corresponding to Fig. 4.

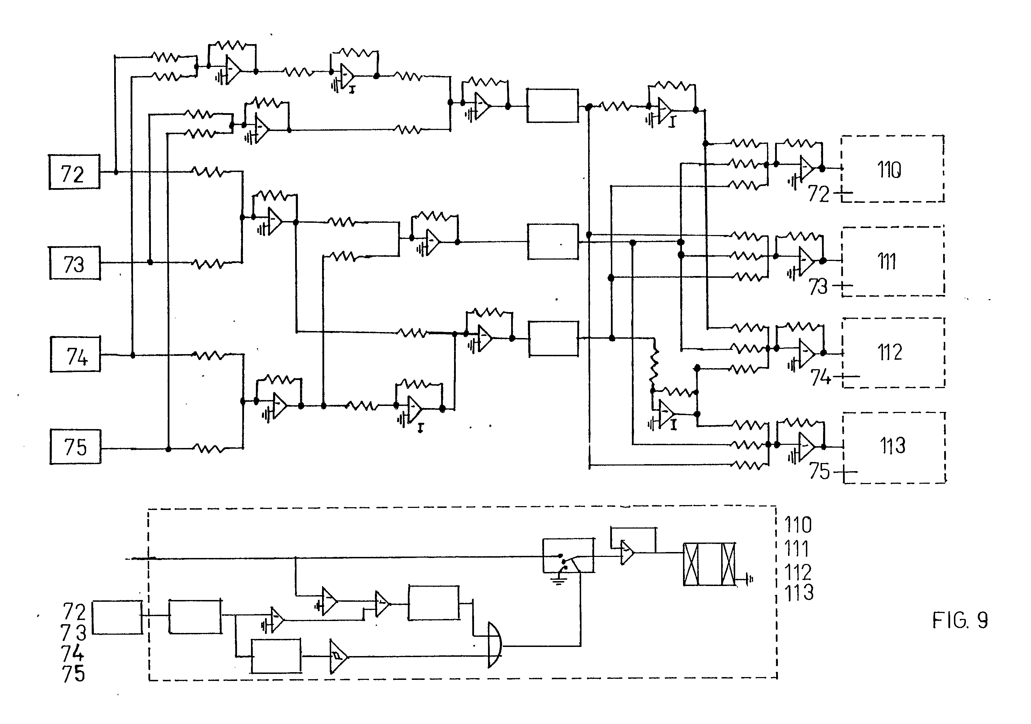

## EXECUTION ACCORDING TO FIG. 9

The control component carries out the same linear combinations as that in Fig. 6.At the outlear of each linear combination are connected Divices 110, 111, 112 and 113 represented in the lower part of Fig. 9. The actuator components are those in Fig. 5.

In all the damping system described the use of relative movement sensors is assumed. The use of absolute movement sensors (accelerometers) is also possible, with the appropiate filters. They have the disadvantage that the information they can be dis turbed significantly due to the inertia forces, created in the changes of direction of the vehicle.

## Claims

FIRST,- A DAMPING SYSTEM FOR ROAD AND RAIL VEHICLES, provided with suspensions with elastic components, including a control component and actuator components situated between the suspended part and each non-suspended part, with the following characteristics: a) it takes advantages of the relative movement between tha said parts to produce forces;b) the said forces are only produced in the sense authorised by a control component, and c) the said sense is that which opposes the self oscillations of the vehicle.

SECOND.- A DAMPING SYSTEM according to claim 1 which uses, in each non-suspended part, an actuator component provi ded with its own control component with the following charac teristics:
- A sensor which emits a signal representative of the possition of the corresponding non-suspended part with regar to the sus pended part.
- A bandpass filter which determines the self oscillations of the suspended mass.
- An on-off component with dead interval and hystenesis, which determines the sense which the force must take in the actuator component.
- Diodes separating the positive and negative parts of the signal proceeding from the on - off component.
- Diodes separating the positive and negative parts of the signal proceeding from the on - off component.
- Power amplifiers which activate the devices situated in the actuator component.
Each actuator component, completed with hydraulic components , consists of:
- A narrow pass in which a pressure jump is produced.
- A pressure limiter valve in both flow directions, which communicates with both sides of the narrow pass.
- A control tube in which are situated electrovalves in opposition in such a way that each one has the possibility, if actioned, of blocking the passage of fluid in one sense, their closed position being overcome when the fluid passes in the opposite sense. The said tube communicates with both sides of the narrow pass.

THIRD,- A DAMPING SYSTEM according to Claim 1 which uses for each non-suspended part an actuator component provided with its own control component which consists of:
- A sensor which emits a signal representative of the position of the corresponding non-suspended part with regard to the suspended part.
- A bandpass filter which determines the self oscillations of the suspended mass.
- An amplifier of the output signal from the bandpass filter
- An amplifier which takes as its reference the signal from the pointer of a potentiometer situated in the axis of a revolving valve in the actuator component.
Each actuator component consists of:
-Narrow passes in which a pressure drop is produced.
-Pressure limiter valves in both flow directions, which communicate with both sides of the narrow passes.
-A revolving valve situated inside a hollow cylinder, which has four lateral tubes perpendicular to the axis of the cylinder and situated according to generating line.These tubes coomunicate -with both sides of the narrow passes. In two of the tubes, and on the exterior surface of the hollow cylinder, elastic plates are situated in such a way that when the revolving valve is in its neutral position the fluid passes freely either through one of the pairs of holes situated in the same generating line, or through the other parts, depending on the sense of the fluid movement. The revolving of the valve simultaneously closes the holes situated in the same generatingline.

FOURTH,- A DAMPING SYSTEM according to Claim 1 which uses in each non-suspended part an actuator component provided with its own control component such as that of Claim 2 in which the on-off components have been aliminated.
Each actuator component which uses a magnetic liquid consists of:
-Two fluid pass control tubes in each of one are situated an elastic plate and a magnetic circuit created by a coil. Each plate allows the circulation of the fluid in one sense without appreciable resistance, and closes when the fluid passes in the opposite sense.
- A pressure limiter valve in both flow senses situated in parallel with the control tubes.

FIFTH.- A DAMPING SYSTEM, according to claims 1 to 4 which uses, for non-suspended part, an actuator component provided with its own control element. Each control element consists of:

- A sensor which emits a signal representative of the position o f each non-suspended part with regard to the suspended part.

- A bandpass filter which determines the self oscillations of the suspended mass..

- An electronic switch with two positions which has as intake the output of the bandpass filter and nil voltage, and whose coil is connected to the actuator component through an amplifier.

- A differenciator circuit connected to the sensor outlet.

- A comparator which, by means of two saturation amplifiers, compares the sense of the signal representative of the relative speed bet ween the suspended and not suspended parts ( proceeding from the shunter circuit) with the sense of the signal representative of the self oscillations ( proceeding from the band-pass filter).

- A Schmitt-trigger whiche takes a signal from a rectifier of the signal which proceeds from the differenciator circuit.

- An OR gate whose intakes are the output signal from a rectifier of the signal proceeding from the cooparator and the out put signal from the Schmitt trigger and whose active output connects to the masss the output of the electronic switch.

- A Power amplifier which activates the coil situated in the actuator component.

The actuator component uses as hydraulic fluid a magnetic liquid and consists of a magnetic circuit excited by a coil, in such a way that the field lines across the fluid circulation tube.

SIXTH,- A DAMPING SYSTEM according to before said claims, whose control system consists of:

- Sensor situated between the suspended part and each non-suspended part, which emit a signal of position between the said parts.

- Amplifiers which combine the signals of the sensor in such a way that some filters pass-band can determine the signals which corresponde to the excited modes of oscillation.

- Amplifiers which the signals resulting from the filters in such a way that on-off components, with dead interval and hysteresis, can determine the sense of the force in each actuator component.

- Diodes separating the positive and negative part of the signals from the on-off component.

- A power amplifier which allows activating of each actuator components from the diodes.

Each actuator component, situated between the suspended part and each non-suspended part, is like that indicated in claim 2.

SEVENTH.- A DAMPING SYSTEM according to the before said claims, which contains a control component like that in claim 6, from which the on-off components and the rectifier diodes, have been aliminated; and in their place, from each actuator component, have been put a signal amplifier and an amplifier which takes as a reference the signal from the pointer of a potentiometer situated in the axis of a revolving valve in the actuator component. The actuator components are those corresponding to claim 3.

EIGHTH =- A DAMPING SYSTEM, according to before said claims which contains a control component like that of claim 6, from which the on-off component have been eliminated, and whose actuator components are those corresponding to claim 4.

NINTH.- A DAMPING SYSTEM according to the before said claims,which contains a control component like that indicated in claim 6, from which the on-of components, and the rectifier diodes, have been aliminated and in which ( from each actuator component) have been added:

- An electronic switch with two positions.

- A differenciator circuit

- A signal comparator

- Two rectifiers

- Two saturation amplifiers.

- A Schmitt-trigger

- An OR gate

The actuator components are those indicated in claim 5.

TENTH.- A DAMPING SYSTEM FOR VEHICLES WITH SENSE CONTROL OF THE DAMPING FORCES PRODUCED.

FIG. 1.A

FIG. 1.B

FIG. 1.C

FIG. 1.D

FIG. 2.A

FIG. 2.B

FIG. 2.C

EP 0 335 016 A1

FIG. 3.A

FIG. 3.C

FIG. 3.G

FIG. 3.B

FIG. 3.D

FIG. 3.E

FIG. 3.F

FIG. 4.A

FIG. 4.B

FIG. 4.C

FIG. 5.A

FIG. 5.B

FIG. 5.C

FIG. 6

FIG. 7

FIG. 8

EP 0 335 016 A1

EP 0 335 016 A1

FIG. 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 807 678 (KARNOPP et al.) * Column 2, figure 6, column 10, lines 15-25, column 3, lines 11-38, figures 1,2 * | 1,10 | B 60 G 17/06 B 61 F 5/12 F 16 F 9/46 |
| A | | 2,3,5,6 | |
| X | FR-A-2 079 874 (FEDERSPIEL) * Figures 2-2d * | 1,10 | |
| X | EP-A-0 215 999 (BARRY WRIGHT) * Figure 3, abstract, page 6, lines 1-17 * | 1,10 | |
| A | | 2,3,5,6 | |
| X | EP-A-0 211 173 (BARRY WRIGHT) * Figure 3, abstract * | 1,10 | |
| A | | 4,5 | |
| P,X | EP-A-0 262 886 (LORD) * Figures 1,3,4, abstract, column 6, lines 56-59 * | 1,10 | |
| P,A | | 2 | TECHNICAL FIELDS SEARCHED (Int. Cl.4) |
| P,X | EP-A-0 277 788 (FORD) * Figures 1,6,8, column 13, lines 8-13 * | 1,10 | F 16 F B 60 G B 61 F G 05 D |
| P,X | DE-A-3 744 469 (BRIDGESTONE) * Figures 9,11-12, column 12, line 58 - column 13, line 62 * | 1,10 | |
| P,A | -/- | 4,5 | |

The present search report has been drawn up for all claims

| Place of search | Date of completion of the search | Examiner |
|---|---|---|
| THE HAGUE | 18-05-1989 | TORSIUS A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| E | EP-A-0 297 608 (NISSAN) <br> * Figures 2,3,5,6, abstract, column 4, lines 14-50 * | 1,10 | |
| A | | 4,5 | |
| | --- | | |
| A | US-A-3 701 499 (SCHUBERT) <br> * Figures 2,8, column 8, lines 54-56 * | 1,2 | |
| | --- | | |
| A | FR-A-1 140 121 (FOUCHE) <br> * Figure 2, page 1, right-hand column, line 11 - page 2, left-hand column, line 1 * | 4,5 | |
| | --- | | |
| A | EP-A-0 151 421 (NISSAN) <br> * Figures 3,18,22-24, page 8, lines 5-21, figures 12-14 * | 2,3,7 | |
| | --- | | |
| A | DE-A-3 631 107 (BILSTEIN) <br> * Figure 7 * | 2-5 | |
| | --- | | TECHNICAL FIELDS SEARCHED (Int. Cl.4) |
| A | US-A-3.770 292 (PALAZZETTI) <br> * Figure 1, column 2, lines 23-30, column 2, lines 46-49 * | 2 | |
| | ----- | | |

The present search report has been drawn up for all claims

| Place of search | Date of completion of the search | Examiner |
|---|---|---|
| THE HAGUE | 18-05-1989 | TORSIUS A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)